# EUROPÄISCHE PATENTSCHRIFT

(11) **EP 0 610 757 B1**
(45) Veröffentlichungstag und Bekanntmachung des Hinweises auf die Patenterteilung: **25.09.1996**
(21) Anmeldenummer: 94101299.9
(22) Anmeldetag: 28.01.1994
(51) Int. Cl.: H02K 9/08, F04D 25/08

(54) **Geschlossene elektrische Maschine mit mindestens einem Innenlüfter**
Fully enclosed electrical engine with at least one internal fan
Machine électrique entièrement fermée avec au moins un ventilateur interne

(30) Priorität: 10.02.1993 DE 4303940
(43) Veröffentlichungstag der Anmeldung: 17.08.1994
(73) Patentinhaber: SIEMENS AKTIENGESELLSCHAFT, 80333 München (DE)
(72) Erfinder: Burmester, Jürgen, Dr., D-97616 Bad Neustadt (DE)

(56) Entgegenhaltungen:
- EP-A- 0 261 295
- GB-A- 681 419
- US-A- 2 970 233

## Beschreibung

Die Erfindung betrifft eine geschlossene elektrische Maschine mit mindestens einem Innenlüfter. Eine solche Maschine ist z.B. aus der GB-A- 681419 bekannt.

Bei geschlossenen elektrischen Maschinen ohne Oberflächenbelüftung erfolgt die Wärmeabgabe über die Maschinenoberflache durch freie Konvexion und Strahlung. Die Höhe der Wärmeabgabe und damit auch die Leistungsgröße der Maschine werden durch deren für die Wärmeabgabe wirksame Gehäuseoberfläche bestimmt. Um die vor allem im Maschineninneren entstehende Verlustwärme effektiver an das Gehäuse zu übertragen, ist es bekannt, Lüfterräder oder sonstige, eine Luftbewegung erzeugende Teile vorzusehen. Infolge dieser Luftbewegung gelangt erwärmte Luft zum Gehäuse. Durch eine derartige Luftverwirbelung läßt sich die Wärmeabgabe der Maschine jedoch nur unwesentlich steigern.

Der Erfindung liegt die Aufgabe zugrunde, eine geschlossene elektrische Maschine mit mindestens einem Innenlüfter so auszubilden, daß bei dieser die Wärmeabgabe gesteigert und somit eine größere Leistung bei gleicher Maschinengröße möglich ist.

Eine diese Anforderungen erfüllende Maschine wird im Anspruch 1 beschrieben. Mit Hilfe des Leitbleches wird bei dieser Maschine der Abluftstrom des Innenlüfters gezielt zu den Strömungsöffnungen des Ständers gelenkt, so daß dieser Luftstrom dann durch diese Strömungsöffnungen hindurch zur anderen Seite der Maschine strömt. Damit wird aber auch eine intensive Rückströmung durch die im Läufer vorgesehenen Strömungsöffnungen bewirkt. Infolge der intensiven Durchströmung von Läufer und Ständer wird die in diesen Maschinenteilen anfallende Verlustwärme besser abgeführt und an das Gehäuse abgegeben.

Mit besonderem Vorteil läßt sich die verbesserte Kühlung bei einer Maschine anwenden, bei der im Ständer ausgeprägte Pole und zwischen diesen liegende Pollücken vorgesehen sind, und bei der das Leitblech jeweils in dem den Pollücken gegenüberliegenden Bereich Durchbrüche aufweist. Bei Maschinen mit ausgeprägten Polen ergeben sich durch die zwischen diesen bestehenden Pollücken Strömungsöffnungen für einen axialen Kühlluftstrom. Durch die den Pollücken gegenüberliegenden Durchbrüche des Leitbleches wird der vom Innenlüfter erzeugte Luftstrom zu den Pollücken gelenkt. Die Pole werden dagegen durch das Leitblech gegenüber dem Luftstrom abgedeckt. Damit wird ein Luftkurzschluß vermieden und der gesamte Luftstrom auf die Pollücken konzentriert.

Besonders günstige Strömungsverhältnisse ergeben sich bei der erfindungsgemäßen Maschine dann, wenn als Innenlüfter ein Radiallüfter vorgesehen ist, in dessen radial innenliegendem Ansaugbereich im Läufer der Maschine als Strömungsöffnungen vorgesehene Kühlkanäle münden und der in seinem Umfangsbereich von dem Leitblech in radialer Richtung überlappt ist. Entsprechend dem natürlichen Strömungsverlauf eines Radiallüfters kann dieser über die radial innenliegenden Strömungskanäle des Läufers Luft ansaugen und nach radial außen fördern. Dort wird die Luft durch das Leitblech in die Strömungsöffnungen des Ständers gelenkt. Bei einem solchen Kreislauf der Kühlluft muß diese beim Einströmen in die Strömungskanäle des Läufers gegebenenfalls an einem auf der dem Innenlüfter gegenüberliegenden Maschinenseite vorhandenen Kommutator vorbeiströmen. Damit wird bei einer mit einem Kommutator versehenen elektrischen Maschine auch noch eine intensive Kühlung des Kommutators erreicht.

Die Strömungsverhältnisse lassen sich bei der erfindungsgemäßen Maschine noch durch eine Ausgestaltung derselben gemäß den Merkmalen der Ansprüche 4 und 5 verbessern. Bei einer Ausgestaltung nach Anspruch 4 wird Rückströmungen der Kühlluft im Bereich des Radiallüfters entgegengewirkt. Bei einer Ausgestaltung nach Anspruch 5 liegt der den Luftstrom zu den Strömungsöffnungen lenkende Teil des Leitbleches günstig zu dem am Gehäuse umgelenkten Luftstrom, so daß die Strömungsverluste verkleinert werden.

Anhand eines in der Zeichnung dargestellten Ausführungsbeispieles wird die Erfindung nachfolgend näher beschrieben. Es zeigt:

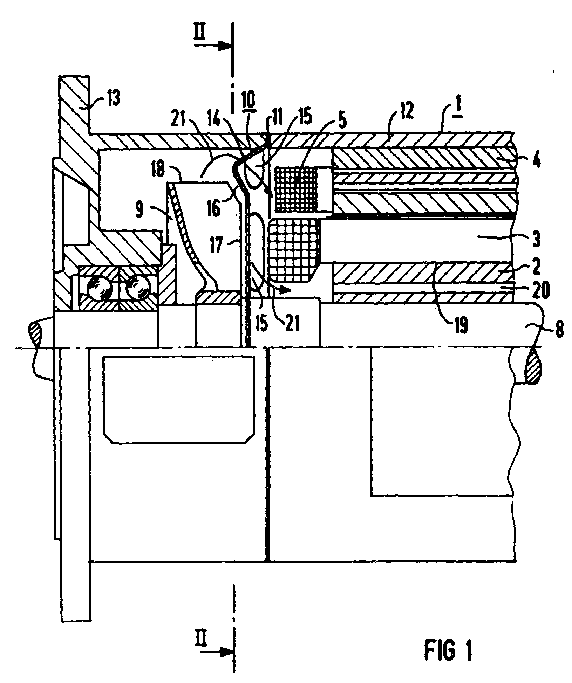

- FIG 1: die Lüfterseite einer elektrischen Maschine im Teillängsschnitt,
- FIG 2: die Lüfterseite einer elektrischen Maschine im Schnitt entlang der Linie II-II in FIG 1.

Mit 1 ist eine Gleichstrommaschine bezeichnet, deren Läufer 2 mit einer Läuferwicklung 3 und deren Ständer 4 mit Hauptpolwicklungen 5 und mit in den zwischen den Hauptpolwicklungen 5 bestehenden Pollücken 6 angeordneten Wendepolwicklungen 7 versehen ist. Auf der Welle 8 des Läufers 2 ist ein Radiallüfter 9 als Innenlüfter der Maschine angebracht.

In dem Raum zwischen dem Radiallüfter 9 und der betreffenden Stirnseite des Ständers 4 ist ein Leitblech 10 angeordnet, das mit seinem Umfangsrand 11 zwischen der Stirnkante des Maschinengehäuses 12 und des auf dieser Maschine angebrachten Lagerschildes 13 eingeklemmt gehalten ist. Das Leitblech 10 weist einen gegenüber dem mit der Stirnkante des Maschinengehäuses 12 parallelen Umlaufrand 11 schräg wegweisenden Teil 14 auf, in welchem Durchbrüche 15 ausgebildet sind. An den schräg wegweisenden Teil 14 schließt sich ein zur Kontur des Radiallüfters 9 parallel verlaufenden und die Kontur des Radiallüfters 9 radial überlappender Teil 16 an. Bei dem dargestellten Ausführungsbeispiel besitzt der Radiallüfter 9 eine von seiner inneren Stirnseite 17 zu seinem Außenumfang 18 hin schräg verlaufende Kontur. Dementsprechend ist auch der überlappende Teil 16 des Leitbleches 10 schräg verlaufend ausgebildet. Der Abstand zwischen den Lüfterschaufeln und dem überlappenden Teil sollte im Bereich von 2-6 mm liegen, um eine Rückströmung wirkungsvoll zu verhindern.

Im Blechpaket des Läufers 2 sind in dem Bereich zwischen den die Läuferwicklung 3 aufnehmenden Nuten 19 und der Welle 8 Kühlkanäle 20 als Strömungsöffnungen vorgesehen. Durch diese Kühlkanäle 20 kann die durch die Pollücken 6 von der Lüfterseite der Maschine zu der gegenüberliegenden Maschinenseite geströmte Kühlluft wieder zu der Lüfterseite zurückströmen. Die Kühlkanäle 20 liegen in ihrer radialen Anordnung im Ansaugbereich des Radiallüfters 9, so daß sich günstige Strömungsverhältnisse ergeben.

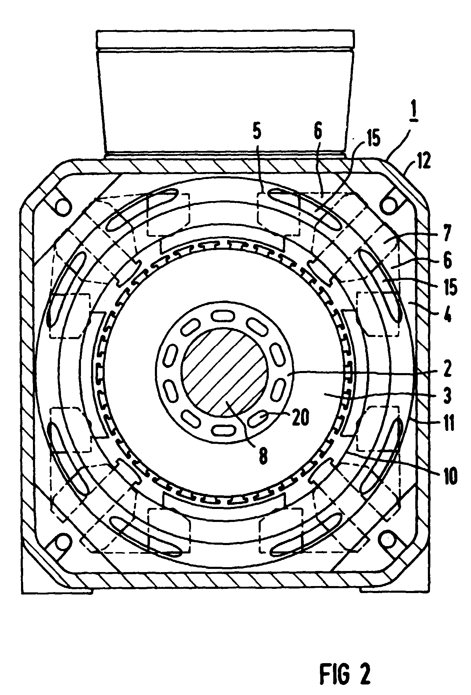

Die von dem Radiallüfter 9 nach radial außen geförderte Kühlluft strömt gegen den entsprechenden Lagerschild 13 der Maschine, wobei sie Warme an diesen abgibt und ungelenkt wird. Die Kühlluft strömt dann, wie durch Pfeile 21 angedeutet, durch die Durchbrüche 15 des Leitbleches 10. Wie aus der FIG 2 erkennbar ist, liegen diese Durchbrüche 15 vor den Pollücken 6 der Maschine, so daß die Kühlluft nach dem Durchtritt durch die Durchbrüche 15 in die Pollücken 6 gelangt und diese zur anderen Maschinenseite hin durchströmt. Von der anderen Maschinenseite strömt die Kühlluft wieder über die Kühlkanäle 20 des Läufers 2 zum Radiallüfter 9 zurück, so daß der Kreislauf geschlossen ist.

Nach dem Durchströmen der Pollücken 6 kommt die Kühlluft auf der anderen Maschinenseite mit den dort befindlichen Teilen des Maschinengehäuses, insbesondere dem dortigen Lagerschild in Berührung und gibt die in den Pollücken 6 von den Haupt- und Wendepolwicklungen 5 und 7 aufgenommene Wärme an das Maschinengehäuse ab. Außerdem umströmt die Kühlluft den auf dieser anderen Maschinenseite befindlichen Kommutator und kühlt diesen. Durch die Anordnung des Leitbleches 10 und die Ausrichtung von dessen Durchbrüchen 15 auf die Pollücken 6 gelingt die gewünschte Führung des Kühlluftstromes. Diese gezielte Führung des Kühlluftstromes führt zu einer wesentlich verbesserten Kühlung der Maschine, die eine entsprechende Leistungssteigerung ermöglicht. So wird in Abhängigkeit von der Drehzahl der Maschine eine Leistungssteigerung von über 30 % gegenüber der Leistung einer Maschine ohne Leitblech 10 erreicht.

## Patentansprüche

1. Geschlossene elektrische Maschine mit mindestens einem Innenlüfter, die sowohl im Ständer (4) als auch im Läufer (2) jeweils sich von der einen zur anderen Maschinenseite durchgehend erstreckende Strömungsöffnungen (6 bzw.20) aufweist und bei der in dem Raum zwischen dem Innenlüfter (9) und der betreffenden Ständerseite ein den Abluftstrom des Innenlüfters (9) zu den Strömungsöffnungen (6) des Ständers (4) lenkendes Leitblech (10) vorgesehen ist.

2. Elektrische Maschine nach Anspruch 1, bei der im Ständer (4) ausgeprägte Pole und zwischen diesen liegende Pollücken (6) vorgesehen sind und bei der das Leitblech jeweils in dem den Pollücken (6) gegenüberliegenden Bereich Durchbrüche (15) aufweist.

3. Elektrische Maschine nach Anspruch 1 oder 2, bei der als Innenlüfter ein Radiallüfter (9) vorgesehen ist, in dessen radial innenliegendem Ansaugbereich im Läufer (2) der Maschine als Strömungsöffnungen vorgesehene Kühlkanäle (20) münden und der in seinem Umfangsbereich von dem Leitblech (10) in radialer Richtung überlappt ist.

4. Elektrische Maschine nach Anspruch 3, bei welcher der sich mit dem Radiallüfter (9) überlappende Teil (16) des Leitbleches (10) zu der in diesem Bereich des Radiallüfters (9) vorliegenden Kontur parallel verläuft.

5. Elektrische Maschine nach einem oder mehreren der vorhergehenden Ansprüche, bei der zumindest der den Kühlluftstrom lenkende Teil (14) des Leitbleches (10) gegenüber der Ebene der Stirnseite der Maschine schräg wegweisend ausgebildet ist.

## Claims

1. Closed electrical machine with at least one internal fan, the machine having both in the stator (4) and in the rotor (2) in each case flow openings (6 and 20) extending continuously from the one machine side to the other machine side, and where in the area between the internal fan (9) and the relevant stator side there is provided an air guide (10) which directs the stream of outgoing air of the internal fan (9) to the flow openings (6) of the stator (4).

2. Electrical machine according to claim 1, where salient poles and pole gaps (6) lying between them are provided in the stator (4) and where the air guide has openings (15) in each case in the area opposite the pole gaps (6).

3. Electrical machine according to claim 1 or 2, where as internal fan a radial-flow fan (9) is provided, in the radially internal intake area of which in the rotor (2) of the machine cooling channels (20), provided as flow openings, open and which in its circumferential area is overlapped by the air guide (10) in the radial direction.

4. Electrical machine according to claim 3, where the part (16) of the air guide (10) overlapping with the radial-flow fan (9) extends in parallel with the contour present in this area of the radial-flow fan (9).

5. Electrical machine according to one or more of the preceding claims, where at least the part (14) of the air guide (10) directing the stream of cooling air is constructed so that it points away in a sloping manner relative to the plane of the front side of the machine.

## Revendications

1. Machine électrique fermée, qui comporte au moins un ventilateur intérieur, et, à la fois dans le stator (4) et dans le rotor (2), des ouvertures (6 et 20) d'écoulement s'étendant d'un côté à l'autre de la machine et la traversant, et dans laquelle il est prévu, dans l'espace compris entre le ventilateur (9) intérieur et le côté concerné du stator, une tôle (10) déflectrice orientant le courant d'air s'échappant du ventilateur intérieur (9) vers les ouvertures (6) d'écoulement du stator.

2. Machine électrique suivant la revendication 1, dans laquelle il est prévu des pôles saillants dans le stator (4) et des intervalles (6) interpolaires et dans laquelle la tôle déflectrice comporte, dans sa zone en face des intervalles (6) interpolaires, des trous (15).

3. Machine électrique suivant la revendication 1 ou 2, dans laquelle il est prévu, comme ventilateur intérieur, un ventilateur radial (9), dans la zone d'aspiration intérieure radiale duquel débouchent, dans le rotor (2) de la machine, des canaux (20) de refroidissement prévus comme ouverture d'écoulement et qui est chevauché, dans la direction radiale, dans sa zone périphérique par la tôle déflectrice (10).

4. Machine électrique suivant la revendication 3, dans laquelle la partie (16) de la tôle (10) déflectrice, qui chevauche le ventilateur radial (9), s'étend parallèlement au contour existant dans cette zone du ventilateur radial (9).

5. Machine électrique suivant l'une ou plusieurs des revendications précédentes, dans laquelle au moins la partie (14) de la tôle déflectrice (10), qui oriente le courant d'air de refroidissement, a une forme oblique s'éloignant du côté frontal de la machine.
